# EUROPÄISCHE PATENTSCHRIFT

(11) **EP 2 726 721 B1**
(45) Veröffentlichungstag und Bekanntmachung des Hinweises auf die Patenterteilung: **01.03.2017**
(21) Anmeldenummer: 12735449.6
(22) Anmeldetag: 20.06.2012
(51) Int. Cl.: F02D 13/02, F01L 1/34, F01L 1/047, F01L 1/053

(54) **BRENNKRAFTMASCHINE**
INTERNAL COMBUSTION ENGINE
MOTEUR A COMBUSTION INTERNE

(30) Priorität: 02.07.2011 DE 102011106394
(43) Veröffentlichungstag der Anmeldung: 07.05.2014
(73) Patentinhaber: Volkswagen Aktiengesellschaft, 38440 Wolfsburg (DE)
(72) Erfinder: GROENENDIJK, Axel, 38518 Gifhorn (DE)
(86) Internationale Anmeldenummer: PCT/EP2012/002593
(87) Internationale Veröffentlichungsnummer: WO 2013/004349

(56) Entgegenhaltungen:
- EP-A2- 2 339 150
- DE-A1-102006 042 912
- FR-A1- 2 843 997
- GB-A- 2 472 054
- US-A1- 2008 215 228

## Beschreibung

Die Erfindung betrifft eine Brennkraftmaschine, insbesondere eine Dieselbrennkraftmaschine, insbesondere eines Kraftfahrzeugs, sowie ein Verfahren zum Betreiben einer solchen Brennkraftmaschine, mit mindestens einem Arbeitszylinder, dem mindestens ein Einlass- und ein Auslassventil zugeordnet sind und in dem ein Hubkolben oszillierend zwischen einem oberen Totpunkt (OT) und einem unteren Totpunkt (UT) bewegt wird, wobei der Hubkolben abwechselnd mit einem Ladungswechselhub, der einen Ausstoßtakt sowie einen Ansaugtakt umfasst, und einem Arbeitshub, der einen Verdichtungstakt und einen Arbeitstakt umfasst, eine Kurbelwelle antreibt, wobei in Abhängigkeit von einem Kurbelwellenwinkel im Ladungswechselhub des Hubkolbens die Einlass- und Auslassventile geöffnet und geschlossen werden. Die Einlass- und Auslassventile werden dabei von den Nocken einer sogenannten "gemischten" Nockenwelle betätigt.

Die Verwendung einer gemischten Nockenwelle ermöglicht, die Verdichtung in dem Arbeitszylinder dadurch abzusenken, dass nach einem UT am Ende des Ladungswechselhubes der Schließzeitpunkt von zumindest einem Einlassventil soweit nach spät verschoben wird, dass ein Teil der zuvor im Ansaugtakt angesaugten Frischgasmenge im Verdichtungstakt durch dieses Einlassventil wieder ausgeschoben wird. Diese Art, eine Brennkraftmaschine zu betreiben, wird auch mit dem Begriff "Miller-Cycle" bezeichnet. Der positive Effekt des Miller-Cycles auf die NOₓ-Emission und Homogenisierbarkeit eines Diesel-Luft-Gemisches ist bekannt. Durch einen Betrieb der Brennkraftmaschine im Miller-Cycle verschlechtert sich jedoch grundsätzlich die Füllung des Arbeitszylinders. Dieser Nachteil kann aber über eine Aufladung des Frischgases durch beispielsweise einen Turbolader oder einen Kompressor kompensiert werden. Dabei wird beispielsweise der Ladedruck im Volumen zwischen dem Ausgang eines Turboladers und dem Einlass der Brennkraftmaschine so geregelt, dass der Ladedruck in jedem Miller-Betriebspunkt, d.h. in jedem Betriebspunkt, in dem der "Miller-Cycle" zur Anwendung kommt, dem theoretischen Verdichtungsenddruck in den Arbeitszylindern der Brennkraftmaschine zum Zeitpunkt "Einlassventil schließt" entspricht. Für die Regelung, wahlweise auch Steuerung, kommen Druck- und/oder Temperatur- und/oder Massenstromsensoren oder sinnvolle Kombisensoren der drei angesprochenen Sensortypen zum Einsatz.

Eine Dieselbrennkraftmaschine mit einer variablen Ventilsteuerung, die nach dem Miller-Cycle betrieben werden kann, ist aus der DE 10 2006 042 912 A1 bekannt.

Das Dokument GB 2 472 054 A offenbart eine Brennkraftmaschine mit zwei Nockenwellen. Eine der Nockenwellen ist als konzentrische Welle, bestehend aus einer Innenwelle und einer Außenwelle, ausgebildete An der konzentrischen Welle ist ein doppeltwirkender Phasensteller angeordnet, welcher in der Lage ist, die Innen- und die Außenwelle relativ zueinander und jeweils zu einer Kurbelwelle der Brennkraftmaschine zu verdrehen.

Die Schrift FR 2 843 997 A1 beschreibt eine Brennkraftmaschine mit zwei Nockenwellen, wobei eine erste und eine zweite Nockenwelle über Nocken jeweils ein Einlass- und ein Auslassventil betätigen. Die dritte offenbarte Ausführungsform umfasst eine konventionelle Nockenwelle mit festen Steuerzeiten und eine konzentrische Nockenwelle, wobei die Steuerzeiten der Einlassventile der konzentrischen Nockenwelle verstellbar und relativ zu den Steuerzeiten der Auslassventile dieser Nockenwelle verstellbar sind. Die Steuerzeiten der Auslavssventile dieser Nockenwelle sind jedoch festgelegt.

Ausgehend von diesem Stand der Technik lag der Erfindung die Aufgabe zugrunde, eine verbesserte Brennkraftmaschine anzugeben. Insbesondere sollte sich die Brennkraftmaschine durch ein verbessertes Betriebsverhalten und/oder durch einen höheren Wirkungsgrad auszeichnen.

Diese Aufgabe wird erfindungsgemäß durch eine Brennkraftmaschine gemäß dem unabhängigen Patentanspruch 1 sowie durch ein Verfahren gemäß dem unabhängigen Patentanspruch 6 gelöst. Vorteilhafte Ausgestaltungen der Erfindung sind Gegenstand der jeweiligen abhängigen Patentansprüche und ergeben sich aus der nachfolgenden Beschreibung der Erfindung.

Der Erfindung liegt der Gedanke zugrunde, dass bei einer Brennkraftmaschine gemäß der DE 10 2006 042 912 A1 die Öffnungsdauer des mittels der variablen Nockenwelle verstellbaren Auslassventils gezwungenermaßen verkürzt sein muss (im Vergleich zu einer Brennkraftmaschine mit festen Steuerzeiten), um bei einer Verstellung des Einlassventils nach spät eine Kollision des Kolben der Brennkraftmaschine mit dem Auslassventil, das gezwungenermaßen gemeinsam mit dem Einlassventil nach spät verstellten wird, zu vermeiden. Dies kann insbesondere bei einem Betrieb der Brennkraftmaschine bei hohen Drehzahlen und Lasten zu Spülungsproblemen führen, da die Gesamtöffnungsdauer der Auslassventile für eine ausreichende Spülung des Zylinders zu gering sein kann.

Dieser Nachteil soll erfindungsgemäß dadurch vermieden werden, dass die variable Nockenwelle so ausgebildet wird, dass eine Verstellung der Steuerzeiten des Einlassventils nicht zwangsweise eine entsprechende Verstellung der Steuerzeiten des Auslassventils bedingt.

Eine gattungsgemäße Brennkraftmaschine weist demnach mindestens einen Arbeitszylinder, dem mindestens jeweils ein Einlass- und ein Auslassventil zugeordnet sind, und mindestens eine Nockenwelle auf, die als sogenannte "gemischte Nockenwelle" ausgebildet ist; d.h. diese Nockenwelle betätigt sowohl mindestens ein Auslass- und ein Einlassventil. Weiterhin ist diese Nockenwelle als variable Nockenwelle ausgebildet, ,d.h. diese weist einen Versteller auf, über den die Ventilsteuerzeiten der Ein- und Auslassventile verstellbar sind. Die gattungsgemäße Brennkraftmaschine ist demnach erfindungsgemäß dadurch weitergebildet, dass die Relativposition der die Einlass- und Auslassventile steuernden Nocken veränderbar ist..

Durch ein Verstellen der Relativposition, die die Nocken auf dem Umfang der Nockenwelle zueinander einnehmen, besteht die Möglichkeit, die Steuerzeiten der von diesen Nocken betätigten Einlass- und Auslassventile (in Grenzen) zu entkoppeln und diese somit unabhängig voneinander zu verstellen. Dadurch kann ein gezielterer Einfluss auf die Steuerzeiten der einzelnen Ventile genommen werden, ohne dass es zu ungewollten Änderungen von Steuerzeiten einzelner Ventile kommt. Im Ergebnis kann durch die erfindungsgemäße Ausgestaltung einer Brennkraftmaschine die Steuerzeiten der einzelnen Ventile besser an den jeweiligen Betriebszustand der Brennkraftmaschine angepasst werden, woraus ein verbessertes Betriebsverhalten und/oder ein höherer Wirkungsgrad resultieren kann.

In einer bevorzugten Ausführungsform der erfindungsgemäßen Brennkraftmaschine kann die Relativposition der die Einlass- und Auslassventile steuernden Nocken dadurch verändert werden, dass die Nockenwelle eine als Hohlwelle ausgebildete Außenwelle und eine innerhalb der Außenwelle angeordnete Innenwelle, die auch als Vollwelle ausgebildet sein kann, umfasst, wobei die Außen- und Innenwelle jeweils zumindest einen der Nocken (vorzugsweise fest angeordnet) aufweist und wobei die Außen- und die Innenwelle mittels des Verstellers relativ zueinander verdrehbar ist. Eine solche Nockenwelle ermöglicht eine Verstellung der Relativposition der Nocken mit einem relativ geringen konstruktiven Aufwand.

In einer Ausführungsform der erfindungsgemäßen Brennkraftmaschine kann vorgesehen sein, dass mittels des Verstellers und der erfindungsgemäßen Ausgestaltung der variablen Nockenwelle eine Verstellung der Steuerzeiten von nur dem oder den Einlass- oder Auslassventilen erfolgt und die Steuerzeiten des/der anderen Ventile nicht veränderbar sind. Bereits durch diese relativ einfache Weiterbildung kann der oben bezüglich der aus der DE 10 2006 042 912 A1 bekannte Nachteil vermieden werden, indem beispielsweise nur die Steuerzeiten des/der Einlassventile nach spät verstellt werden, ohne gleichzeitig die Steuerzeiten des/der Auslassventile zu verändern. Dadurch besteht keine Notwendigkeit mehr, die Öffnungsdauer eines von der variablen Nockenwelle gesteuerten Auslassventils gegenüber der Öffnungsdauer eines von einer festen Nockenwelle gesteuerten Auslassventils zu verkürzen.

Bei einer solchen Ausgestaltung der erfindungsgemäßen Brennkraftmaschine kann vorzugsweise vorgesehen, sein, dass die Verstellung der Steuerzeiten von nur dem Einlass- oder Auslassventil dadurch erreicht wird, dass (nur) die Innenwelle mit dem damit verbundenen Nocken mittels des Verstellers verdreht wird. Dies kann gegenüber einer ebenfalls möglichen Ausgestaltung, bei der (nur) die Außenwelle mittels des Verstellers verdreht wird, den Vorteil haben, dass der Versteller kleiner dimensioniert wird, da die Anordnung der Innenwelle in der Außenwelle eine relativ reibungsarme Lagerung ermöglicht, die demnach nur ein entsprechend geringes Drehmoment für die Verdrehung erfordert.

Nun kann die die Verstellung der Steuerzeiten des Auslassventils aber ach - und trotz der damit bei der Brennkraftmaschine gemäß der DE 10 2006 042 912 A1 erforderlichen Verkürzung der Öffnungsdauer - Vorteile bieten, denn durch die Überschneidung der Steuerzeiten der von der variablen und einer festen Nockenwelle betätigten Auslassventile kann eine insgesamt verlängerte Öffnungsdauer für den Brennraum erreicht werden. Dies ermöglicht einen verbesserten Ladungswechsel in dem Arbeitszylinder.

Eine besonders bevorzugte Ausführungsform der erfindungsgemäßen Brennkraftmaschine ermöglicht nun, diesen Vorteil der Überschneidung der Ventilsteuerzeiten auch ohne den Nachteil der verkürzten Öffnungsdauer des von der variablen Nockenwelle betätigten Auslassventils zu erreichen. Diese Ausführungsform sieht nämlich vor, dass sowohl die Außenals auch die Innenwelle der variablen Nockenwelle mittels des Verstellers verdrehbar sind, und zwar unabhängig voneinander oder zumindest ohne eine Kopplung derart, dass beide in der gleiche Richtung verdreht werden.

Diese Ausgestaltung wird besonders bevorzugt mit einer Weiterbildung der erfindungsgemäßen Brennkraftmaschine kombiniert, bei der dem Arbeitszylinder (mindestens) zwei Einlass- und (mindestens) zwei Auslassventile zugeordnet sind, wobei (mindestens) zwei Nockenwellen vorgesehen sind, von denen jede als gemischte Nockenwelle ausgebildet ist, d.h. jede der Nockenwellen betätigt jeweils mindestens ein Einlass- und ein Auslassventil.

Konkret ermöglicht diese besonders bevorzugte Ausführungsform in einem Betriebszustand der Brennkraftmaschine die Steuerzeiten des Einlassventils der variablen Nockenwelle nach spät und diejenigen des Auslassventils der variablen Nockenwelle nach früh zu verstellen. Dadurch können die Vorteile eines späten Einlassschlusses, insbesondere in einem Miller-Cycle mit einer Ventilüberschneidung der Auslassventile kombiniert werden, ohne auf Seiten der variablen Nockenwelle eine verkürzte Öffnungsdauer des Auslassventils in Kauf nehmen zu müssen.

Eine solche Ausgestaltung der erfindungsgemäßen Brennkraftmaschine ermöglicht deren Betrieb gemäß einem erfindungsgemäßen Verfahren, bei dem vorgesehen ist, in einem ersten Betriebsbereich, der insbesondere durch mittlere bis hohe Lasten und niedrige bis mittlere Drehzahlen der Brennkraftmaschine gekennzeichnet ist, die Steuerzeiten der von der variablen Nockenwelle betätigten Einlass- und Auslassventile im Wesentlichen den Steuerzeiten der von der festen Nockenwelle betätigten Einlass- und Auslassventile entsprechen zu lassen und/oder in einem zweiten Betriebsbereich, der gegenüber dem ersten Betriebsbereich durch höhere Drehzahlen (bei den jeweiligen Lasten) der Brennkraftmaschine gekennzeichnet ist, die Steuerzeiten des von der variablen Nockenwelle betätigten Einlassventils nach früh und des Auslassventils nach spät zu verstellen. Dadurch kann in den verschiedenen Betriebszuständen der Brennkraftmaschine das Betriebsverhalten und/oder der Wirkungsgrad verbessert werden. Weiterhin kann in einem dritten Betriebsbereich, der durch niedrige bis mittlere Lasten der Brennkraftmaschine gekennzeichnet ist, die Steuerzeiten des von der variablen Nockenwelle betätigten Auslassventils im Wesentlichen den Steuerzeiten des von der festen Nockenwelle betätigten Auslassventils entsprechen und die Steuerzeiten des von der variablen Nockenwelle (18) betätigten Einlassventils nach spät verstellt werden

Vorzugsweise kann weiterhin vorgesehen sein, dass in einem vierten Betriebsbereich, der durch einen Kaltlauf der Brennkraftmaschine gekennzeichnet ist (d.h. die Brennkraftmaschine hat noch nicht ihre(n) Betriebstemperatur(bereich) erreicht), die Steuerzeiten des von variablen Nockenwelle betätigten Einlassventils nach früh und des Auslassventils nach spät verstellt werden und die feste Nockenwelle deaktiviert wird (d.h. die von dieser "normalerweise" betätigten Ventile bleiben geschlossen). Dieser vierte Betriebsbereich der Brennkraftmaschine ist vorzugsweise (lediglich) bei sehr niedrigen bis mittleren Drehzahlen und bei sehr niedrigen bis niedrigen Lasten vorgesehen.

Eine entsprechende erfindungsgemäße Brennkraftmaschine ist durch die Möglichkeit gekennzeichnet, die feste Nockenwelle deaktivieren zu können. Dies kann gemäß beliebiger, aus dem Stand der Technik bekannter Ausgestaltungen erfolgen. Beispielsweise kann eine Abkoppelung der gesamten Nockenwelle vorgesehen sein oder es erfolgt eine Deaktivierung von einzelnen oder allen Kipphebeln oder Hydrostößeln, über die die Ventile von den Nocken der Nockenwelle betätigt werden.

Die Erfindung wird nachfolgend anhand eines in den Zeichnungen dargestellten Ausführungsbeispiels näher erläutert. Die Zeichnungen zeigen in
- Fig. 1:: eine Ausführungsform einer erfindungsgemäßen Brennkraftmaschine in einer Aufsicht;
- Fig. 2:: eine schematische Darstellung der Nockenwellenanordnung bei der Brennkraftmaschine gemäß Fig. 1;
- Fig. 3:: eine graphische Darstellung der Ventilbewegungen der Einlass- und Auslassventile der Brennkraftmaschine gemäß Fig. 1 und 2 in einer ersten Verstellposition der variablen Nockenwelle;
- Fig. 4:: eine graphische Darstellung der Ventilbewegungen der Einlass- und Auslassventile in einer zweiten Verstellposition der variablen Nockenwelle;
- Fig. 5:: eine graphische Darstellung der Ventilbewegungen der Einlass- und Auslassventile in einer dritten Verstellposition der variablen Nockenwelle;
- Fig. 6:: eine graphische Darstellung der Ventilbewegungen der Einlass- und Auslassventile in einer vierten Verstellposition der variablen Nockenwelle; und
- Fig. 7:: eine Zuordnung der Verstellpositionen gemäß Fig. 3 bis 6 in einem Betriebskennfeld der Brennkraftmaschine.

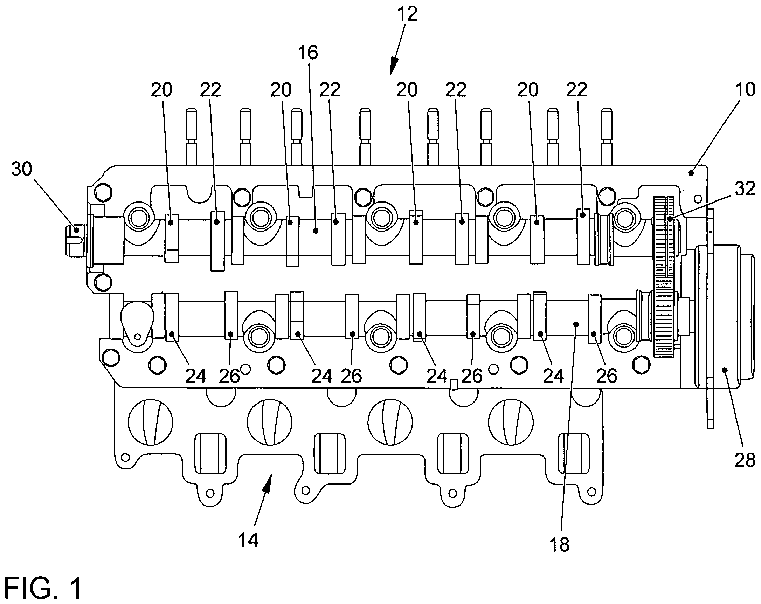

Die in Fig. 1 dargestellte Ausführungsform einer erfindungsgemäßen Brennkraftmaschine umfasst einen Zylinderkopf 10, in den nicht näher dargestellte Arbeitszylinder integriert sind, in denen sich jeweils ein Hubkolben (nicht dargestellt) oszillierend zwischen einem oberen Totpunkt (OT) und einem unteren Totpunkt (UT) bewegt. Der Zylinderkopf 10 umfasst eine Auslassseite 12, an der Abgase aus den Arbeitszylindern abgeführt werden, und eine Einlassseite 14, an der den Arbeitszylindern Frischgas zugeführt wird.

Jedem Arbeitszylinder sind zwei Einlassventile (nicht dargestellt) und zwei Auslassventile (nicht dargestellt) zugeordnet, wobei eine feste Nockenwelle 16 und eine variable Nockenwelle 18 vorgesehen sind. Die feste Nockwelle 16 trägt Einlassnocken 20, die jeweils ein Einlassventil betätigen, und Auslassnocken 22, die jeweils ein Auslassventil betätigen. Ebenso trägt die variable Nockenwelle 18 Einlassnocken 24, die jeweils ein Einlassventil betätigen, und Auslassnocken 26, die jeweils ein Auslassventil betätigen. Auf beiden Nockenwellen 16, 18 wechseln sich (in Längsrichtung gesehen) jeweils Einlassnocken 20, 24 und Auslassnocken 22, 26 ab. Auf diese Weise werden die beiden Einlassventile und Auslassventile eines jeden Arbeitszylinders von verschiedenen Nockenwellen 16, 18 betätigt. Somit ist jede der Nockenwellen 16, 18 eine sogenannte gemischte Nockenwelle, d.h. jede Nockenwelle 16, 18 betätigt sowohl Einlass- als auch Auslassventile über entsprechende Einlassnocken 20, 24 bzw. Auslassnocken 22, 26.

Die Steuerzeiten der der festen Nockenwelle 16 zugeordneten Einlass- und Auslassventile sind unveränderbar festgelegt. An der variablen Nockenwelle 18 ist ein Versteller 28 angeordnet, über den die Steuerzeiten der dieser zugeordneten Einlass- und Auslassventile verändert werden können, indem die zweite Nockenwelle 18 durch den Versteller 28 verdreht wird. Die feste Nockenwelle 16 wird bei 30 von einer nicht dargestellten Kurbelwelle der Brennkraftmaschine angetrieben. Die feste Nockenwelle 16 treibt dann ihrerseits über Zahnräder 32 die variable Nockenwelle 18 an.

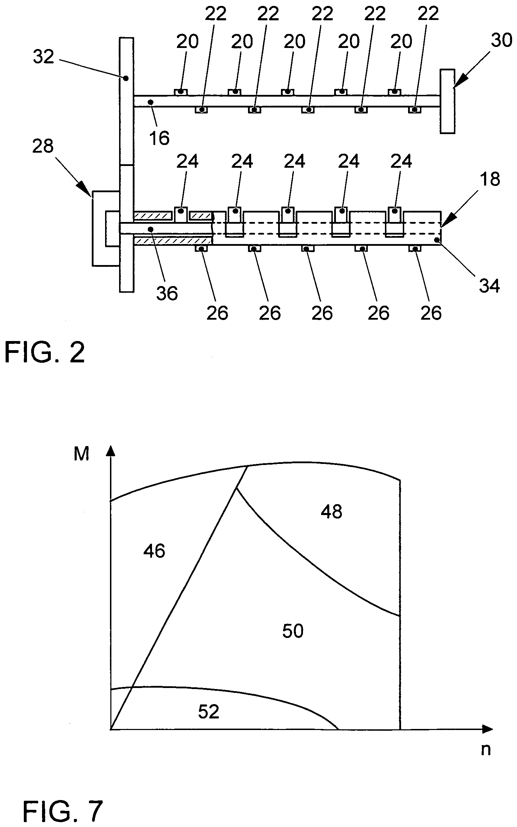

Die variable Nockenwelle 18 ist erfindungsgemäß derart ausgebildet, dass diese die Steuerzeiten der von ihr betätigten Ein- und Auslassventile getrennt voneinander verändern kann. Hierzu umfasst die variable Nockenwelle 18 eine als Hohlwelle ausgebildete Außenwelle 34 und eine als Vollwelle ausgebildete Innenwelle 36 (vgl. Fig. 2). Dabei ist die Innenwelle 36 mit insgesamt vier Einlassnocken 20 versehen, die das entsprechende Einlassventil jedes der Arbeitszylinder betätigen. Die Einlassnocken sind dabei jeweils in einer länglichen, in Umfangsrichtung ausgerichteten Öffnung der Außenwelle 34 gerührt, um eine Relativverdrehung der Außen- 34 zur Innenwelle 36 zu ermöglichen. Die Außenwelle 34 trägt vier Auslassnocken 22, die die ihr zugeordneten Auslassventile betätigen. Der Versteller 28 ist als doppelt wirkender Versteller ausgebildet, wie dies in der Fig. 2 schematisch dargestellt ist. Dieser ermöglicht, die Innen- 36 und die Außenwelle 34 unabhängig voneinander um einen definierten Winkelbereich gegenüber der durch die Koppelung über die Zahnräder 32 festgelegten (rotatorischen) Relativposition der beiden Nockenwellen 16, 18 zu verstellen. Dabei ist vorgesehen, die die entsprechenden Einlassventile betätigende Innenwelle 36 um einen Verstellwinkel von beispielsweise maximal 50° und die die jeweiligen Auslassventile betätigende Außenwelle 34 um einen Verstellwinkel von maximal -30° gegenüber einer Ausgangsposition (relativ zu der festen Nockenwelle 16) zu verdrehen.

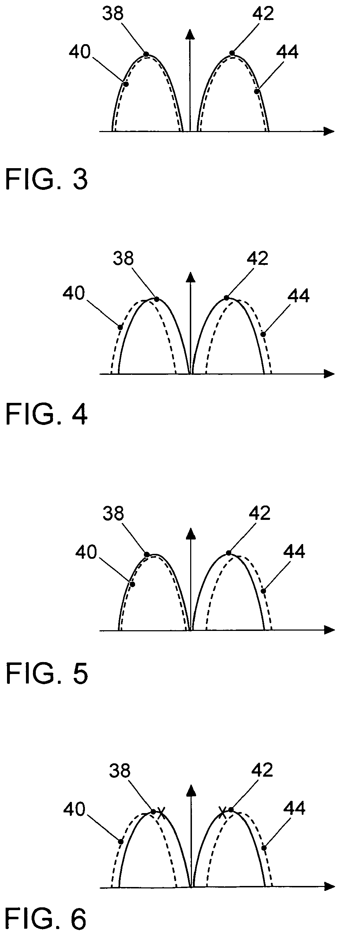

Die Fig. 3 bis 6 zeigen verschiedene Verstellpositionen für die erfindungsgemäße Brennkraftmaschine gemäß den Fig. 1 und 2. Dabei ist jeweils auf der horizontalen Achse ein Kurbelwellenwinkel (in °KW) und auf der vertikalen Achse eine Hubbewegung (in mm) aufgetragen. Ein erster Graph 38 veranschaulicht die Hubbewegung über dem Kurbelwellenwinkel für diejenigen Auslassventile, die von den Auslassnocken 22 der festen Nockenwelle 16 gesteuert werden. Ein zweiter Graph 40 (gestrichelt) veranschaulicht die Hubbewegung über dem Kurbelwellenwinkel für diejenigen Auslassventile, die von den Auslassnocken 26 der variablen Nockenwelle 18 gesteuert werden. Ein dritter Graph 42 veranschaulicht die Hubbewegung über dem Kurbelwellenwinkel für diejenigen Einlassventile, die von den Einlassnocken 20 der festen Nockenwelle 16 gesteuert werden und ein vierter Graph 44 (gestrichelt) veranschaulicht die Hubbewegung über dem Kurbelwellenwinkel für diejenigen Einlassventile, die von den Einlassnocken 24 der variablen Nockenwelle 18 gesteuert werden.

In der Fig. 3 ist eine Verstellposition der variablen Nockenwelle 18 mit einem Verstellwinkel für die Außen- 34 und Innenwelle 36 von jeweils 0°KW dargestellt, d.h. die Nockenwellen 16, 18 gelten als nicht gegeneinander verdreht. In dieser Verstellposition öffnen und schließen die von den beiden Nockenwellen 16, 18 betätigten Einlass- und Auslassventile annähernd gleichzeitig und weisen demnach auch eine nahezu identische Öffnungsdauer auf. Zudem ist die Nockenform der einzelnen Nocken derart, dass sich für alle Ventile ein (annähernd) gleicher Maximalhub ergibt (der in den Fig. 3 bis 6 dargestellte, geringfügige Unterschied der Hubbewegungen der Einlass- und Auslassventile dient lediglich der besseren Übersichtlichkeit).

Die in der Fig. 3 dargestellte Verstellposition kann beispielsweise für den Betrieb der Brennkraftmaschine in einem ersten Betriebsbereich 46 vorgesehen sein, der durch niedrige bis hohe Lasten und niedrige bis mittlere Drehzahlen gekennzeichnet ist. Dies ist in der Fig. 7 dargestellt, die ein Betriebskennfeld (Last M über der Drehzahl n) der Brennkraftmaschine zeigt.

In der Fig. 4 ist eine Verstellposition der variablen Nockenwelle 18 dargestellt, bei der die die Auslassventile steuernde Außenwelle 34 so verdreht ist, dass sich eine Verschiebung der Steuerzeiten der von dieser betätigten Auslassventile nach früh ergibt, und die die Einlassventile steuernde Innenwelle 36 so verdreht ist, dass sich eine Verschiebung der Steuerzeiten der von dieser betätigten Einlassventile nach spät ergibt. Dabei ist vorgesehen, die Einlassventile mit kleinen bis mittleren Werten (bezogen auf die maximal möglichen Werte) nach spät zu verstellen.

Die in der Fig. 4 dargestellte Verstellposition kann beispielsweise für den Betrieb der Brennkraftmaschine in einem zweiten Betriebsbereich 48 vorgesehen sein, der durch mittlere bis hohe Lasten und mittlere bis hohe Drehzahlen gekennzeichnet ist (vgl. Fig. 7).

In der Fig. 5 ist eine Verstellposition der variablen Nockenwelle 18 dargestellt, bei der die die Auslassventile steuernde Außenwelle 34 einen Verstellwinkel von 0° aufweist, während die die Einlassventile steuernde Innenwelle 36 so verdreht ist, dass sich eine Verschiebung der Steuerzeiten der von dieser betätigten Einlassventile nach spät ergibt. Dabei ist vorgesehen, die Einlassventile mit mittleren bis maximalen Werten nach spät zu verstellen.

Die in der Fig. 5 dargestellte Verstellposition kann beispielsweise für den Betrieb der Brennkraftmaschine in einem dritten Betriebsbereich 50 vorgesehen sein, der die gesamten restlichen, nicht von dem ersten 46 und zweiten Betriebsbereich 48 abgedeckten Betriebszustände der Brennkraftmaschine abdeckt (vgl. Fig. 7).

In der Fig. 6 ist eine weitere Betriebsart der Brennkraftmaschine dargestellt, die lediglich im Kaltlauf der Brennkraftmaschine, d.h. wenn diese noch nicht Ihre Betriebstemperatur erreicht hat, gewählt wird. Für diese Betriebsart der Brennkraftmaschine ist ein vierter Betriebsbereich 52 vorgesehen, der in einem Teilbereich des ersten 46 und dritten 50 Betriebsbereichs liegt. In diesem vierten Betriebsbereich 52 erfolgt eine Verstellung der von der variablen Nockenwelle verstellbaren Ein- und Auslassventile entsprechend derjenigen, die für den zweiten Betriebsbereich 48 vorgesehen ist. Zusätzlich erfolgt eine Abschaltung der von der festen Nockenwelle 16 gesteuerten Ventile (gekennzeichnet durch einen durchkreuzten Ventilweg für die Ventile; vgl. Fig. 7).

### Bezugszeichenliste

- 10: Zylinderkopf
- 12: Auslassseite
- 14: Einlassseite
- 16: feste Nockenwelle
- 18: variable Nockenwelle
- 20: Einlassnocken der festen Nockenwelle
- 22: Auslassnocken der variablen Nockenwelle
- 24: Einlassnocken der festen Nockenwelle
- 26: Auslassnocken der variablen Nockenwelle
- 28: Versteller
- 30: Antrieb
- 32: Zahnrad
- 34: Außenwelle
- 36: Innenwelle
- 38: Hubbewegung: festes Auslassventil
- 40: Hubbewegung: variables Auslassventil
- 42: Hubbewegung: festes Einlassventil
- 44: Hubbewegung: variables Einlassventil
- 46: erster Betriebsbereich
- 48: zweiter Betriebsbereich
- 50: dritter Betriebsbereich
- 52: vierter Betriebsbereich

## Patentansprüche

1. Brennkraftmaschine mit einem Arbeitszylinder, wobei dem Arbeitszylinder jeweils zwei Einlass- und zwei Auslassventile zugeordnet sind, wobei eine erste und eine zweite Nockenwelle über Nocken jeweils ein Einlass- und ein Auslassventil betätigen, wobei die erste Nockenwelle als variable Nockenwelle (18) mit einem Versteller (28) zur Verstellung der Ventilsteuerzeiten ausgebildet ist und eine als Hohlwelle ausgebildete Außenwelle (34) und eine innerhalb der Außenwelle (34) angeordnete Innenwelle (36) umfasst, wobei die Außen- (34) und die Innenwelle (36) jeweils zumindest einen der Nocken aufweist **dadurch gekennzeichnet dass** sowohl die Außen- (34) als auch die Innenwelle (36) mittels des Verstellers (28) verdrehbar sind und die Außen- (34) und die Innenwelle (36) mittels des Verstellers relativ zueinander verdrehbar sind, so dass die Relativpositionen der die Einlass- und Auslassventile steuernden Nocken veränderbar ist, und wobei die zweite Nockenwelle als feste Nockenwelle (16) ausgebildet ist, welche von einer Kurbelwelle der Brennkraftmaschine angetrieben ist.

2. Brennkraftmaschine gemäß Anspruch 1, **dadurch gekennzeichnet, dass** einzelne oder alle Kipphebel oder Hydrostößel, über die die Ventile von den Nocken der festen Nockenwelle betätigt werden, deaktivierbar sind.

3. Verfahren zum Betrieb einer Brennkraftmaschine gemäß Anspruch 1 oder 2, **dadurch gekennzeichnet, dass**
- in einem ersten Betriebsbereich (46), der durch mittlere bis hohe Lasten und niedrige bis mittlere Drehzahlen der Brennkraftmaschine gekennzeichnet ist, die Steuerzeiten der von der variablen Nockenwelle (18) betätigten Einlass- und Auslassventile im Wesentlichen den Steuerzeiten der von der festen Nockenwelle (16) betätigten Einlass- und Auslassventile entsprechen; und/oder
- in einem zweiten Betriebsbereich (48), der gegenüber dem ersten Betriebsbereich (46) durch höhere Drehzahlen der Brennkraftmaschine gekennzeichnet ist, die Steuerzeiten des von der variablen Nockenwelle (18) betätigten Einlassventils nach spät und des Auslassventils nach früh verstellt werden und/oder
- in einem dritten Betriebsbereich (50), der durch niedrige bis mittlere Lasten der Brennkraftmaschine gekennzeichnet ist, die Steuerzeiten des von der variablen Nockenwelle (18) betätigten Auslassventils im Wesentlichen den Steuerzeiten des von der festen Nockenwelle (16) betätigten Auslassventils entsprechen und die Steuerzeiten des von der variablen Nockenwelle (18) betätigten Einlassventils nach spät verstellt wird.

4. Verfahren zum Betrieb einer Brennkraftmaschine gemäß Anspruch 3, **dadurch gekennzeichnet, dass** im Kaltlauf der Brennkraftmaschine die Steuerzeiten des von der variablen Nockenwelle (18) betätigten Einlassventils nach früh und des Auslassventils nach spät verstellt werden und einzelne oder alle Kipphebel oder Hydrostößel, über die die Ventile von den Nocken der festen Nockenwelle betätigt werden, deaktiviert werden.

## Claims

1. Internal combustion engine having a working cylinder, wherein the working cylinder is assigned in each case two inlet and two outlet valves, wherein a first and a second camshaft actuate, by way of cams, in each case one inlet and one outlet valve, wherein the first camshaft is in the form of a variable camshaft (18) with an adjuster (28) for the adjustment of the valve timings and comprises an outer shaft (34), which is in the form of a hollow shaft, and an inner shaft (36), which is arranged within the outer shaft (34), wherein the outer shaft (34) and the inner shaft (36) have in each case at least one of the cams, **characterized in that** both the outer shaft (34) and the inner shaft (36) are rotatable by way of the adjuster (28), and the outer shaft (34) and the inner shaft (36) are rotatable by way of the adjuster relative to one another such that the relative positions of the cams that control the inlet and outlet valves are variable, and wherein the second camshaft is in the form of an invariable camshaft (16) which is driven by a crankshaft of the internal combustion engine.

2. Internal combustion engine according to Claim 1, **characterized in that** some or all of the rocker levers or hydraulic tappets by way of which the valves are actuated by the cams of the invariable camshaft are deactivatable.

3. Method for operating an internal combustion engine according to Claim 1 or 2, **characterized in that**,
- in a first operating range (46) which is **characterized by** medium to high loads and low to medium rotational speeds of the internal combustion engine, the timings of the inlet and outlet valves that are actuated by the variable camshaft (18) substantially correspond to the timings of the inlet and outlet valves that are actuated by the invariable camshaft (16); and/or,
- in a second operating range (48), which is **characterized by** higher rotational speeds of the internal combustion engine in relation to the first operating range (46), the timings of the inlet valve that is actuated by the variable camshaft (18) are adjusted in a retarding direction and those of the outlet valve are adjusted in an advancing direction, and/or,
- in a third operating range (50), which is **characterized by** low to medium loads of the internal combustion engine, the timings of the outlet valve that is actuated by the variable camshaft (18) substantially correspond to the timings of the outlet valve that is actuated by the invariable camshaft (16), and the timings of the inlet valve that is actuated by the variable camshaft (18) are adjusted in a retarding direction.

4. Method for operating an internal combustion engine according to Claim 3, **characterized in that**, during cold running of the internal combustion engine, the timings of the inlet valve that is actuated by the variable camshaft (18) are adjusted in an advancing direction and those of the outlet valve are adjusted in a retarding direction, and some or all of the rocker levers or hydraulic tappets by way of which the valves are actuated by the cams of the invariable camshaft are deactivated.

## Revendications

1. Moteur à combustion interne comprenant un cylindre de travail, au cylindre de travail étant à chaque fois associées deux soupapes d'entrée et deux soupapes de sortie, un premier et un deuxième arbre à cames actionnant à chaque fois une soupape d'entrée et une soupape de sortie par le biais de cames, le premier arbre à cames étant réalisé sous forme d'arbre à cames variable (18) avec un dispositif de réglage (28) pour le réglage des temps de commande de soupape et comprenant un arbre extérieur (34) réalisé sous forme d'arbre creux et un arbre intérieur (36) disposé à l'intérieur de l'arbre extérieur (34), l'arbre extérieur (34) et l'arbre intérieur (36) présentant chacun au moins l'une des cames, **caractérisé en ce que**
l'arbre extérieur (34) ainsi que l'arbre intérieur (36) peuvent être entraînés en rotation au moyen du dispositif de réglage (28) et l'arbre extérieur (34) et l'arbre intérieur (36) peuvent être entraînés en rotation l'un par rapport à l'autre au moyen du dispositif de réglage de telle sorte que les positions relatives des cames commandant les soupapes d'entrée et de sortie puissent être modifiées, et le deuxième arbre à cames étant réalisé sous forme d'arbre à cames fixe (16) qui est entraîné par un vilebrequin du moteur à combustion interne.

2. Moteur à combustion interne selon la revendication 1, **caractérisé en ce que** des leviers basculants ou des poussoirs hydrauliques individuels, ou la totalité de ceux-ci, par le biais desquels les soupapes sont actionnées par les cames de l'arbre à cames fixe, peuvent être désactivés.

3. Procédé de fonctionnement d'un moteur à combustion interne selon la revendication 1 ou 2, **caractérisé en ce que**
- dans une première plage de fonctionnement (46) qui est **caractérisée par** des charges moyennes à élevées et par des régimes faibles à moyens du moteur à combustion interne, les temps de commande des soupapes d'entrée et de sortie actionnées par l'arbre à cames variable (18) correspondent essentiellement aux temps de commande des soupapes d'entrée et de sortie actionnées par l'arbre à cames fixe (16) ; et/ou
- dans une deuxième plage de fonctionnement (48) qui est **caractérisée, par** rapport à la première plage de fonctionnement (46), par des régimes supérieurs du moteur à combustion interne, les temps de commande de la soupape d'entrée actionnée par l'arbre à cames variable (18) sont ajustés dans le sens du retard, et les temps de commande de la soupape de sortie sont ajustés dans le sens de l'avance et/ou
- dans une troisième plage de fonctionnement (50), qui est **caractérisée par** des charges faibles à moyennes du moteur à combustion interne, les temps de commande de la soupape de sortie actionnée par l'arbre à cames variable (18) correspondent essentiellement aux temps de commande de la soupape de sortie actionnée par l'arbre à cames fixe (16) et les temps de commande de la soupape d'entrée actionnée par l'arbre à cames variable (18) sont ajustés dans le sens du retard.

4. Procédé de fonctionnement d'un moteur à combustion interne selon la revendication 3, **caractérisé en ce qu'**en mode de fonctionnement à froid du moteur à combustion interne, les temps de commande de la soupape d'entrée actionnée par l'arbre à cames variable (18) sont ajustés dans le sens de l'avance et les temps de commande de la soupape de sortie sont ajustés dans le sens du retard et des leviers basculants ou des poussoirs hydrauliques individuels, ou la totalité de ceux-ci, par le biais desquels les soupapes sont actionnées par les cames de l'arbre à cames fixe, sont désactivés.
